# EUROPEAN PATENT SPECIFICATION

(11) **EP 2 725 878 B1**
(45) Date of publication and mention of the grant of the patent: **02.01.2019**
(21) Application number: 12803173.9
(22) Date of filing: 22.06.2012
(51) Int. Cl.: H05B 37/02, H05B 33/08

(54) **POWER SUPPLY FOR LED LIGHTING**
STROMVERSORGUNG FÜR EINE LED-BELEUCHTUNG
ALIMENTATION ÉLECTRIQUE POUR ÉCLAIRAGE À LED

(30) Priority: 22.06.2011 CN 201120238482 U
(43) Date of publication of application: 30.04.2014
(73) Proprietor: ROHM CO., LTD., Kyoto (JP)
(72) Inventor: MURANAKA, Masahiro, Kyoto (JP); SAWADA, Akinobu, Kyoto (JP); YE, Daqu, Kyoto (JP); YU, Guanggang, Kyoto (JP)
(74) Representative: Isarpatent
(86) International application number: PCT/CN2012/077393
(87) International publication number: WO 2012/175043

(56) References cited:
- WO-A1-2011/045371
- WO-A1-2011/045371
- CN-A- 101 263 746
- CN-A- 101 677 483
- CN-U- 201 789 663
- CN-U- 201 789 663
- US-A1- 2007 057 642
- US-A1- 2010 066 266

## Description

### TECHNICAL FIELD

The present invention relates to an LED (light-emitting diode) illumination power supply.

### BACKGROUND

WO 2011/045371 A1 discloses employing large volume of electrolyte capacitors for smoothing.

US 2007/057642 A1 discloses a valley fill circuit for lamp driving circuit.

CN 201 789 663 U discloses a constant current power supply for a Light Emitting Diode (LED).

US 2010/066 266 A1 relates to a light emitting device control method for adjusting the brightness of the light emitting device by an AC signal, comprising: receiving a signal having a turn ON angle and converting the signal to a DC signal; obtaining an average of the DC signal level, the average being a function of the turn ON angle; determining a reference voltage of a current source circuit according to the average of the DC signal level; and controlling a current flow through the light emitting device by the current source circuit.

In the past, incandescent and fluorescent lamps were commonly used for illumination. When incandescent lamps are used, the incandescent lamps are directly connected to an AC power source. However, the luminescence efficiency of the incandescent lamps is not high due to heat generation. On the other hand, when fluorescent lamps are used, a ballast or a power supply for fluorescent lamp illumination is connected to the AC power source, so as to lighten the fluorescent lamps. The luminescence efficiency of the fluorescent lamp is higher than that of the incandescent lamps, but the fluorescent lamp cannot be applied in the TRIAC dimming manner that is widely used in incandescent lamp illumination.

Currently, in order to meet the requirements of energy saving, LEDs are more and more widely used for illumination. The service life of the LED is generally 40,000 hours or even more than 100,000 hours, greater than that of incandescent and fluorescent lamps, and the luminescence efficiency thereof is also higher.

When LEDs are used, usually, the AC power is rectified by utilizing a diode bridge, then is smoothed by utilizing an electrolytic capacitance of large capacity, and then is supplied to LEDs. Hence, in the LED illumination power supply, an electrolytic capacitance of large capacity must be used. However, the service life of the electrolytic capacitance is generally only a few thousands hours to ten thousands hours, much shorter than that of the LED, so the service life of the LED is generally dependent on the electrolytic capacitance.

In addition, LEDs can be applied in the TRIAC dimming manner that is widely used in incandescent lamp illumination. However, after the AC power is rectified by utilizing the diode bridge, and then is smoothed by utilizing an electrolytic capacitance of large capacity, a certain current (bleeder current) must be maintained all the time, and acts as a TRIAC maintaining current to maintain conduction of the TRIAC, so utilization efficiency of the LED driving current is not high.

### BRIEF DESCRIPTION OF THE INVENTION

The present invention is completed in view of the above problems, for the purposes of reducing the capacity of the capacitance in the LED illumination power supply, replacing the electrolytic capacitance of large capacity with a solid capacitance of small capacity having a longer service lift, thereby greatly improving the service life of LED illumination lamps. In addition, another purpose of the present invention is to reduce bleeder current in the LED illumination power supply when the TRIAC dimming manner is adopted.

This is achieved by the features of independent claim 1.

The LED illumination power supply of the present invention comprises a diode bridge, a LED driving circuit, a driving current controlling unit, an input voltage detecting unit, and a valley filling circuit. The diode bridge rectifies AC power. The LED driving circuit drives LEDs with constant current. The driving current controlling unit is electrically connected to the LED driving circuit, and controls LED driving current. The input voltage detecting unit detects an input voltage after the diode bridge rectifies the AC power. A threshold value of the input voltage detecting unit is set to be a minimum required voltage value or more of LED. The valley filling circuit is electrically connected to the LED driving circuit and the input voltage detecting unit respectively, and has a capacitance. When the input voltage detected by the input voltage detecting unit is the threshold value or more, the LEDs are directly supplied with electrical power. When the input voltage detected by the input voltage detecting unit is lower than the threshold value, the LEDs are supplied with electrical power by the capacitance that has been charged.

According to the above configuration, since the constant current driving manner is adopted, a stable LED driving current in which glint or stroboflash disappears is obtained. In addition, the solid capacitance can be used to replace the electrolytic capacitance, so the service life of LED illumination lamps is not dependant on the electrolytic capacitance any more, and thus can be greatly improved. Moreover, the period for directly utilizing the AC power becomes longer, so the power factor increases.

In addition, the LED illumination power supply of the present invention further comprises a dimming controlling unit, a current detecting unit, and a bleeder circuit. The dimming controlling unit is electrically connected between the driving current controlling unit and the input voltage detecting unit, and controls an LED current set value based on an input voltage conduction angle detected by the input voltage detecting unit. The current detecting unit detects current in the LED illumination power supply. The bleeder circuit does not work when a current value detected by the current detecting unit is greater than a required current as set, and works when the current value detected by the current detecting unit is lower than the required current as set.

According to the above configuration, since the LED driving current is efficiently utilized, so as to act as a TRIAC maintaining current, so bleeder current that is consumed uselessly can be reduced, and heat as generated due to the bleeder current can be decreased.

In addition, the LED driving circuit can comprise a transformer, a driving transistor, and a sensing resistance. In this case, the LEDs are driven with constant current via the transformer. The driving current controlling unit conducts driving control to pulse width or height of the driving transistor based on a voltage of the sensing resistance, thereby controlling the LED driving current.

In addition, the LED driving circuit can also comprise an inductance, a driving transistor and a sensing resistance. In this case, the LEDs are driven with constant current via the inductance. The driving current controlling unit conducts driving control to pulse width or height of the driving transistor based on a voltage of the sensing resistance, thereby controlling the LED driving current.

### BRIEF DESCRIPTION OF THE DRAWINGS

Fig. 1 is a module diagram of the LED illumination power supply according to a first example.
Fig. 2 is a schematic diagram showing an output voltage waveform of the valley filling circuit in the LED illumination power supply according to the first example.
Fig. 3 is a module diagram of the LED illumination power supply according to the embodiment of the present invention.
Fig. 4(a) is a schematic diagram showing an output voltage waveform of the valley filling circuit in the LED illumination power supply according to the embodiment of the present invention.
Fig. 4(b) is a schematic diagram showing a current waveform of the TRIAC dimmer involved in the second embodiment of the present invention.

### DETAILED DESCRIPTION

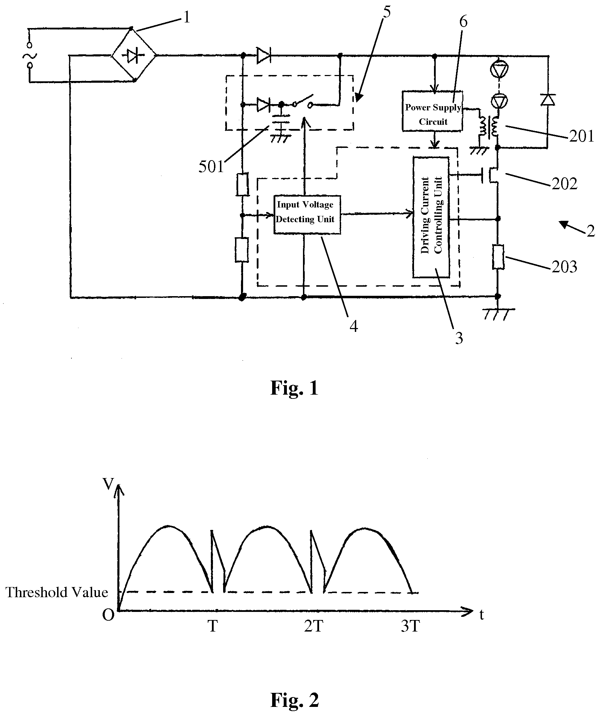

The first example. is explained below with reference to Fig. 1 and Fig. 2.

Fig. 1 is a module diagram of the LED illumination power supply according to the first embodiment of the present invention. Fig. 2 is a schematic diagram showing an output voltage waveform of the valley filling circuit in the LED illumination power supply according to the first example.

As shown in Fig. 1, the LED illumination power supply of the present invention comprises a diode bridge 1, a LED driving circuit 2, a driving current controlling unit 3, an input voltage detecting unit 4, and a valley filling circuit 5.

The diode bridge 1 rectifies AC power, rectifying the AC voltage from the AC power source into DC input voltage.

The LED driving circuit 2 drives illumination LEDs with constant current. The LED driving circuit 2 comprises a transformer 201, a driving transistor 202 and a sensing resistance 203. The LED driving circuit 2 drives the LEDs with constant current via the transformer 201. The driving current controlling unit 3 is electrically connected to the LED driving circuit 2, and conducts driving control to pulse width or height of the driving transistor 202 based on a voltage of the sensing resistance 203, thereby controlling LED driving current.

The input voltage detecting unit 4 detects an input voltage after the diode bridge 1 rectifies the AC power. A threshold value of the input voltage detecting unit 4 is set to be a minimum required voltage value or more of the LEDs.

The valley filling circuit 5 is connected to the LED driving circuit 2 and the input voltage detecting unit 4 respectively. The valley filling circuit 5 has a capacitance 501. When the input voltage detected by the input voltage detecting unit 4 is the threshold value or more, the LEDs are directly supplied with electrical power. When the input voltage detected by the input voltage detecting unit 4 is lower than the threshold value, the LEDs are supplied with electrical power by the capacitance 501 that has been charged.

In addition, the LED illumination power supply further has a power supply circuit 6. The power supply circuit 6 supplies electrical power to the inside of the LED illumination power supply.

Then, operation of the LED illumination power supply according to the first example is described below.

Firstly, the diode bridge 1 rectifies an AC power, rectifying the AC voltage from the AC power source to a DC input voltage. Then, the input voltage reaches the valley filling circuit 5. Moreover, the input voltage detecting unit 4 detects the input voltage all the time.

The output voltage waveform of the valley filling circuit 5 is shown in Fig. 2. When the input voltage detected by the input voltage detecting unit 4 is the threshold value or more, the LEDs are directly supplied with electrical power. When the input voltage detected by the input voltage detecting unit 4 is lower than the threshold value, i.e., when it is likely that the LEDs cannot be sufficiently driven, the LEDs is supplied with electrical power by the charged capacitance 501 in the valley filling circuit 5, i.e., a low voltage portion (valley portion) in the waveform of the rectified input voltage is supplemented.

The driving current controlling unit 3 conducts driving control to pulse width or height of the driving transistor 202 based on a voltage of the sensing resistance 203, such that the LED driving circuit 2 can utilize the output voltage from the valley filling circuit 5 to drive the LEDs with constant current via the transformer 201, thereby rendering the LEDs emit light stably.

According to the first example since the constant current driving manner is adopted, a stable LED driving current in which glint or stroboflash disappears is obtained.

In addition, according to the first example the solid capacitance can be used to replace the electrolytic capacitance, so the service life of LED illumination lamps is not dependent on the electrolytic capacitance any more, and thus can be greatly improved.

Moreover, according to the first example the period for directly utilizing the AC power becomes longer, so the power factor increases.

Although the first example relates to the LED illumination power supply, the present invention can also be applied in an AC/DC convertor. In this case, a constant voltage output circuit can be used to replace the LED driving circuit 2.

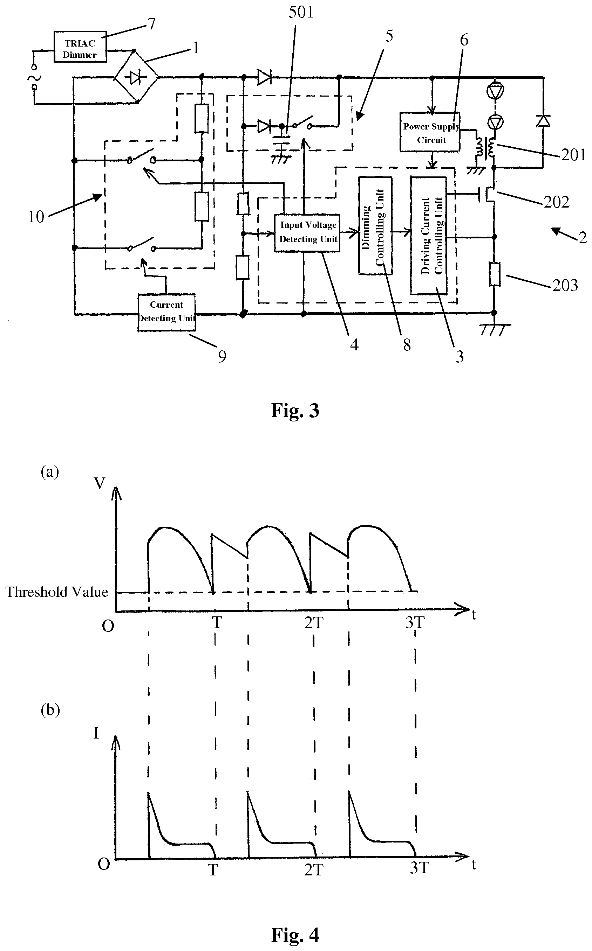

The embodiment of the present invention is explained below with reference to Fig. 3 to Fig. 4(b).

Fig. 3 is a module diagram of the LED illumination power supply according to the second embodiment of the present invention. Fig. 4(a) is a schematic diagram showing an output voltage waveform of the valley filling circuit in the LED illumination power supply according to the second embodiment of the present invention. Fig. 4(b) is a schematic diagram showing a current waveform of the TRIAC dimmer involved in the embodiment of the present invention.

In addition, the parts that are the same as those of the above first example are provided with same reference signs, and explanations thereof are omitted.

The LED illumination power supply according to the embodiment of the present invention can be applied in the TRIAC dimming manner that is widely used in incandescent lamp illumination. Relative to the LED illumination power supply of the first example, the difference of the LED illumination power supply of the embodiment lies in that, it further comprises a dimming controlling unit 8, a current detecting unit 9, and a bleeder circuit 10.

The dimming controlling unit 8 is electrically connected between the driving current controlling unit 3 and the input voltage detecting unit 4, and controls an LED current set value based on an input voltage conduction angle detected by the input voltage detecting unit 4.

The current detecting unit 9 detects current in the LED illumination power supply.

The bleeder circuit 10 does not work when a current value detected by the current detecting unit 4 is greater than a required current as set, and works when the current value detected by the current detecting unit 4 is lower than the required current as set.

Then, operation of the LED illumination power supply according to the embodiment is described below, wherein the portions that are the same as those of the first example are omitted.

In the case that a TRIAC dimmer 7 is utilized for linear dimming, the output voltage waveform of the valley filling circuit 5 is shown in Fig. 4(a). Similarly, when the input voltage detected by the input voltage detecting unit 4 is the threshold value or more, the LEDs are directly supplied with electrical power. When the input voltage detected by the input voltage detecting unit 4 is lower than the threshold value, i.e., when it is likely that the LEDs cannot be sufficiently driven, the LEDs is supplied with electrical power by the charged capacitance 501 in the valley filling circuit 5, i.e., a low voltage portion (valley portion) in the waveform of the rectified input voltage is supplemented.

The current detecting unit 9 detects current in the LED illumination power supply all the time. Since, after conduction of TRIAC is realized, a certain current must be maintained therein, so as to maintain its conduction, the bleeder circuit 10 does not work when a current value detected by the current detecting unit 4 is greater than the TRIAC maintaining current, and works when the current value detected by the current detecting unit 4 is lower than the TRIAC maintaining current, so as to maintain the current in the TRIAC above the maintaining current. In this case, the current waveform in the TRIAC dimmer 7 is shown in Fig. 4(b).

According to the embodiment, since the LED driving current is efficiently utilized, and is taken as a TRIAC maintaining current, so bleeder current that is consumed uselessly can be reduced, and heat as generated due to the bleeder current can be decreased.

The present invention is described above by utilizing the above embodiment. However, the present invention is not limited to the above embodiment. For example, inductance can be used to replace the above transformer 201, and in this case, the same function as the transformer 201 can also be performed.

## Claims

1. An LED illumination power supply for supplying LEDs comprising a diode bridge (1), a LED driving circuit (2), a driving current controlling unit (3) and a valley filling circuit (5) having a capacitor (501), the diode bridge (1) rectifying AC power and outputting an input voltage; the LED driving circuit (2) drives the LEDs with a LED driving current being a constant current; the driving current controlling unit (3) is electrically connected to the LED driving circuit (2), and controls the LED driving current; **characterized by**
an input voltage detecting unit (4) being coupled to the diode bridge (1) and detecting the input voltage and having a threshold value, which is set to be a minimum required voltage value or more of the LEDs; the valley filling circuit (5) is electrically connected to the LED driving circuit (2) and the input voltage detecting unit (4) respectively, wherein when the input voltage detected by the input voltage detecting unit (4) is the threshold value or more, the LEDs are directly supplied with electrical power via the diode bridge (1); when the input voltage detected by the input voltage detecting unit (4) is lower than the threshold value, the LEDs are supplied with a supplementary electrical power by the capacitance (501) that has been charged, the LED illumination power supply further comprises a dimming controlling unit (8), a current detecting unit (9), and a bleeder circuit (10), wherein
the dimming controlling unit (8) is electrically connected between the driving current controlling unit (3) and the input voltage detecting unit (4), and controls an LED current set value based on an input voltage conduction angle detected by the input voltage detecting unit (4);
the current detecting unit (9) detects a current value in the LED illumination power supply; the bleeder circuit (10) being coupled to the diode bridge (1) and being adapted to not work when the current value detected by the current detecting unit (9) is greater than a required current as set, and to work when the current value detected by the current detecting unit (9) is lower than the required current as set.

2. The LED illumination power supply according to claim 1, **characterized in that**,
the LED driving circuit (2) comprises a transformer (201), a driving transistor (202), and a sensing resistance (203);
the LEDs are driven with the constant current via the transformer (201); the driving current controlling unit (3) conducts driving control to pulse width or height of the driving transistor (202) based on a voltage of the sensing resistance (203), thereby controlling the LED driving current.

3. The LED illumination power supply according to claim 1, **characterized in that**,
the LED driving circuit (2) comprises an inductance, a driving transistor (202), and a sensing resistance (203);
the LEDs is driven with the constant current via the inductance; the driving current controlling unit (3) conducts driving control to pulse width or height of the driving transistor (202) based on a voltage of the sensing resistance (203), thereby controlling the LED driving current.

## Patentansprüche

1. LED-Beleuchtungs-Stromversorgung zum Versorgen von LEDs, die eine Diodenbrücke (1), eine LED-Ansteuerschaltung (2), eine Ansteuerstrom-Steuereinheit (3) und eine Talausfüllschaltung (5), die einen Kondensator (501) hat, umfasst, wobei die Diodenbrücke (1) Wechselstrom gleichrichtet und eine Eingangsspannung ausgibt;
die LED-Ansteuerschaltung (2) die LEDs mit einem LED-Ansteuerstrom ansteuert, der ein konstanter Strom ist;
die Ansteuerstrom-Steuereinheit (3) elektrisch mit der LED-Ansteuerschaltung (2) verbunden ist und den LED-Ansteuerstrom steuert;
**gekennzeichnet durch**
eine Eingangsspannungsdetektionseinheit (4), welche mit der Diodenbrücke (1) gekoppelt ist und welche die Eingangsspannung detektiert und welche einen Schwellenwert hat, der auf mindestens einen erforderlichen Mindestspannungswert der LEDs eingestellt wird;
wobei die Talausfüllschaltung (5) elektrisch mit der LED-Ansteuerschaltung (2) bzw. der Eingangsspannungsdetektionseinheit (4) verbunden ist, wobei:
wenn die durch die Eingangsspannungsdetektionseinheit (4) detektierte Eingangsspannung mindestens der Schwellenwert ist, die LEDs direkt über die Diodenbrücke (1) mit elektrischer Energie versorgt werden;
wenn die durch die Eingangsspannungsdetektionseinheit (4) detektierte Eingangsspannung niedriger ist als der Schwellenwert, die LEDs mit einer elektrischen Ergänzungsleistung durch die Kapazität (501) versorgt werden, die geladen wurde,
die LED-Beleuchtungs-Stromversorgung des Weiteren eine Dimm-Steuereinheit (8), eine Stromdetektionseinheit (9) und eine Ableitschaltung (10) umfasst, wobei
die Dimm-Steuereinheit (8) elektrisch zwischen der Ansteuerstrom-Steuereinheit (3) und der Eingangsspannungsdetektionseinheit (4) verbunden ist und einen LED-Strom-Sollwert auf der Basis eines durch die Eingangsspannungsdetektionseinheit (4) detektierten Eingangsspannungsleitungswinkels steuert;
die Stromdetektionseinheit (9) einen Stromwert in der LED-Beleuchtungs-Stromversorgung detektiert;
die Ableitschaltung (10) mit der Diodenbrücke (1) gekoppelt ist und dafür ausgelegt ist, nicht zu arbeiten, wenn der durch die Stromdetektionseinheit (9) detektierte Stromwert größer ist als ein erforderlicher eingestellter Strom, und zu arbeiten, wenn der durch die Stromdetektionseinheit (9) detektierte Stromwert niedriger ist als der erforderliche eingestellte Strom.

2. LED-Beleuchtungs-Stromversorgung nach Anspruch 1, **dadurch gekennzeichnet, dass**
die LED-Ansteuerschaltung (2) einen Transformator (201), einen Ansteuerungstransistor (202) und einen Detektionswiderstand (203) umfasst;
die LEDs mit dem konstanten Strom über den Transformator (201) angesteuert werden; und
die Ansteuerstrom-Steuereinheit (3) auf der Basis einer Spannung des Detektionswiderstands (203) eine Ansteuerungssteuerung ausführt, um eine Breite oder Höhe des Ansteuerungstransistors (202) zu pulsieren, wodurch der LED-Ansteuerstrom gesteuert wird.

3. LED-Beleuchtungs-Stromversorgung nach Anspruch 1, **dadurch gekennzeichnet, dass**
die LED-Ansteuerschaltung (2) eine Induktivität, einen Ansteuerungstransistor (202) und einen Detektionswiderstand (203) umfasst;
die LEDs mit dem konstanten Strom über die Induktivität angesteuert werden;
die Ansteuerstrom-Steuereinheit (3) auf der Basis einer Spannung des Detektionswiderstands (203) eine Ansteuerungssteuerung ausführt, um eine Breite oder Höhe des Ansteuerungstransistors (202) zu pulsieren, wodurch der LED-Ansteuerstrom gesteuert wird.

## Revendications

1. Alimentation électrique pour éclairage à DEL, destinée à alimenter des DEL comprenant un pont de diodes (1), un circuit d'attaque de DEL (2), une unité de régulation de courant d'attaque (3) et un circuit de compensation des creux de tension (5) comportant un condensateur (501),
le pont de diodes (1) redressant un courant alternatif et délivrant une tension d'entrée ;
le circuit d'attaque de DEL (2) attaque les DEL avec un courant d'attaque de DEL qui est un courant constant ;
l'unité de régulation de courant d'attaque (3) est électriquement connectée au circuit d'attaque de DEL (2) et régule le courant d'attaque de DEL ;
**caractérisée par** :
une unité de détection de tension d'entrée (4) couplée au pont de diodes (1) et détectant la tension d'entrée, et ayant une valeur de seuil qui est définie comme étant supérieure ou égale à une valeur de tension minimum requise des DEL ;
le circuit de compensation des creux de tension (5) est électriquement connecté au circuit d'attaque des DEL (2) et à l'unité de détection de tension d'entrée (4) respectivement, dans laquelle lorsque la tension d'entrée détectée par l'unité de détection de tension d'entrée (4) est supérieure ou égale à la valeur de seuil, les DEL sont directement alimentées en énergie électrique par le biais du pont de diodes (1) ;
lorsque la tension d'entrée détectée par l'unité de détection de tension d'entrée (4) est inférieure à la valeur de seuil, les DEL sont alimentées en une énergie électrique supplémentaire par le condensateur (501) qui a été chargé, l'alimentation électrique pour éclairage à DEL comprend en outre une unité de commande de gradation (8), une unité de détection de courant (9) et un circuit de fuite (10), dans laquelle :
l'unité de commande de gradation (8) est électriquement connectée entre l'unité de régulation de courant d'attaque (3) et l'unité de détection de tension d'entrée (4), et règle une valeur de consigne de courant de DEL sur la base d'un angle de conduction de tension d'entrée détecté par l'unité de détection de tension d'entrée (4) ;
l'unité de détection de courant (9) détecte une valeur de courant dans l'alimentation électrique pour éclairage à DEL ;
le circuit de fuite (10) étant couplé au pont de diodes (1) et étant conçu pour ne pas fonctionner lorsque la valeur de courant détectée par l'unité de détection de courant (9) est supérieure à un courant requis tel que défini, et pour fonctionner lorsque la valeur de courant détectée par l'unité de détection de courant (9) est inférieure au courant requis tel que défini.

2. Alimentation électrique pour éclairage à DEL selon la revendication 1, **caractérisé en ce que** :
le circuit d'attaque de DEL (2) comprend un transformateur (201), un transistor d'attaque (202) et une résistance de détection (203) ;
les DEL sont attaquées avec le courant d'attaque par le biais du transformateur (201) ;
l'unité de régulation de courant d'attaque (3) réalise une régulation d'attaque en agissant sur la largeur ou la hauteur d'impulsion du transistor d'attaque (202), sur la base d'une tension de la résistance de détection (203), de manière à réguler le courant d'attaque de DEL.

3. Alimentation électrique pour éclairage à DEL selon la revendication 1, **caractérisé en ce que** :
le circuit d'attaque de DEL (2) comprend une bobine d'inductance, un transistor d'attaque (202) et une résistance de détection (203) ;
les DEL sont attaquées avec le courant constant par le biais de la bobine d'inductance ;
l'unité de régulation de courant d'attaque (3) réalise une régulation d'attaque en agissant sur la largeur ou la hauteur d'impulsion du transistor d'attaque (202), sur la base d'une tension de la résistance de détection (203), de manière à réguler le courant d'attaque de DEL.
